# EUROPÄISCHE PATENTSCHRIFT

(11) **EP 0 688 940 B1**
(45) Veröffentlichungstag und Bekanntmachung des Hinweises auf die Patenterteilung: **14.01.1998**
(21) Anmeldenummer: 95103610.2
(22) Anmeldetag: 14.03.1995
(51) Int. Cl.: F01N 3/08, F01N 3/20, B01D 53/32

(54) **Ottomotor mit Katalysator**
Otto engine with catalytic converter
Moteur-Otto avec catalyseur

(30) Priorität: 24.05.1994 DE 4418117
(43) Veröffentlichungstag der Anmeldung: 27.12.1995
(73) Patentinhaber: DAIMLER-BENZ AKTIENGESELLSCHAFT, 70567 Stuttgart (DE)
(72) Erfinder: Wunderlich, Klaus, Dipl.-Ing., D-71334 Waiblingen (DE); Pischinger, Stefan, Dr., D-71336 Waiblingen (DE); Krutzsch, Bernd, Dr., D-73770 Denkendorf (DE); Bechtold, Martin, Dipl.-Ing., D-70327 Stuttgart (DE)

(56) Entgegenhaltungen:
- EP-A- 0 458 217
- DE-A- 3 807 907
- US-A- 3 950 944
- PATENT ABSTRACTS OF JAPAN vol. 7 no. 261 (M-257) ,19.November 1983 & JP-A-58 143113 (NISSAN) 25.August 1983,
- PATENT ABSTRACTS OF JAPAN vol. 11 no. 89 (C-411) ,19.März 1987 & JP-A-61 242622 (TOYOTA) 28.Oktober 1986,

## Beschreibung

Die Erfindung betrifft ein Ottomotor mit Katalysator gemäß dem Oberbegriff des Patentanspruchs 1.

Für Ottomotoren ist zur Senkung des Kraftstoffverbrauchs ein Betrieb mit magerem Luft-/Kraftstoffverhältnis bekannt. Dadurch sind Verbrauchsvorteile im unteren Teillastbereich von bis zu 10% zu erreichen. Durch den Sauerstoffüberschuß im Abgas bei Magerbetrieb kann der Drei-Wege-Katalysator seine Funktion, im Abgas enthaltene Stickoxide durch Restkohlenwasserstoffe zu reduzieren, jedoch nicht mehr aufrechterhalten. Bei Denox-Katalysatoren kann der Sauerstoffüberschuß zu einer Vergiftung der aktiven Katalysatorfläche führen, wodurch die Konversionsrate erheblich reduziert wird.

Zur Verringerung des Sauerstoffanteils im Abgas ist es beispielsweise aus der DE-OS 38 07 907 bekannt, in der Abgasleitung eines Verbrennungsmotors stromauf des Drei-Wege-Katalysators eine Sauerstoff-Adsorptionsvorrichtung anzuordnen, die in Abhängigkeit vom Partialdruck Sauerstoff aus der Abgasleitung adsorbiert oder desorbiert. Diese Vorrichtung hat zwar aufgrund ihrer Pufferwirkung einen Einfluß auf die Abgaszusammensetzung, wobei der Sauerstoffanteil bei einer Abgaszusammensetzung mit hohem Sauerstoffanteil reduziert wird. Mit dieser Anordnung ist es jedoch nicht möglich, den Sauerstoffgehalt im Abgas gezielt in Abhängigkeit von der Betriebsweise des Verbrennungsmotors zu beeinflussen. Dadurch ist es nicht möglich, den Ottomotor in unterschiedlichen Bereichen des Luft-/Kraftstoffverhältnisses zu betreiben, ohne die Funktionsfähigkeit des Katalysators erheblich zu beeinträchtigen.

Aus der US-A 3 950 499 ist weiterhin eine Vorrichtung bekannt, bei der der Sauerstoffgehalt im Abgas eines Verbrennungsmotors mit Hilfe einer Sauerstoff-Absorptionsvorrichtung in Abhängigkeit von den Anforderungen eines stromab angeordneten Katalysators aus der Abgasleitung entfernt werden kann.

Die Aufgabe der Erfindung besteht darin, ein Ottomotor mit Katalysator so zu verbessern, daß der Kraftstoffverbrauch reduziert werden kann, ohne den Schadstoffausstoß zu beeinträchtigen.

Die Aufgabe wird erfindungsgemäß durch die kennzeichnenden Merkmale des Patentanspruchs 1 beziehungweise 2 gelöst.

Durch die Anordnung einer Sauerstoff-Absorptionsvorrichtung, die durch eine Steuervorrichtung gezielt aktiviert oder deaktiviert werden kann und die den Sauerstoff aus dem Abgas nicht nur zwischenpuffert, sondern wirklich aus der Abgasleitung abführt, ist es möglich, die Abgaszusammensetzung in unterschiedlichen Betriebsmodi des Ottomotors gezielt zu beeinflussen. Bei Vollast kann der Ottomotor in der herkömmlichen Art und Weise betrieben werden, wobei das Luft-/Kraftstoffverhältnis auf einen Wert im Bereich λ=1 geregelt und die Sauerstoff-Absorptionsvorrichtung deaktiviert wird. Im Teillastbereich wird der Ottomotor auf ein mageres Luft-/Kraftstoffverhältnis umgestellt, wobei die Sauerstoff-Absorptionsvorrichtung aktiviert wird. Dadurch ergeben sich erhebliche Verbrauchsvorteile. Im Abgas wird durch die Sauerstoffabsorption eine Zusammensetzung entsprechend einem Betrieb bei λ=1 erreicht, so daß sich gegenüber dem herkömmlichen Ottomotor mit Drei-Wege-Katalysator keine Verschlechterung des Schadstoffausstoßes einstellt.

Bei Verwendung eines Denox-Katalysators ist es möglich, den Ottomotor ständig mit einem mageren Luft-/Kraftstoffverhältnis zu betreiben, wobei bei eventuell auftretenden Vergiftungserscheinungen aufgrund des Sauerstoffüberschußes im Katalysator kurzzeitig die Sauerstoff-Absorptionsvorrichtung aktiviert und dadurch die Katalysatoroberfläche wieder reduziert wird.

Weitere Vorteile und Ausgestaltungen gehen aus den Unteransprüchen und der Beschreibung hervor. Die Erfindung ist nachstehend anhand einer Zeichnung näher beschrieben, wobei
- Fig. 1: eine Prinzipdarstellung eines erfindungsgemäßen Ottomotors mit Drei-Wege-Katalysator und
- Fig. 2: ein weiteres Ausführungsbeispiel eines erfindungsgemäßen Ottomotors zeigen.

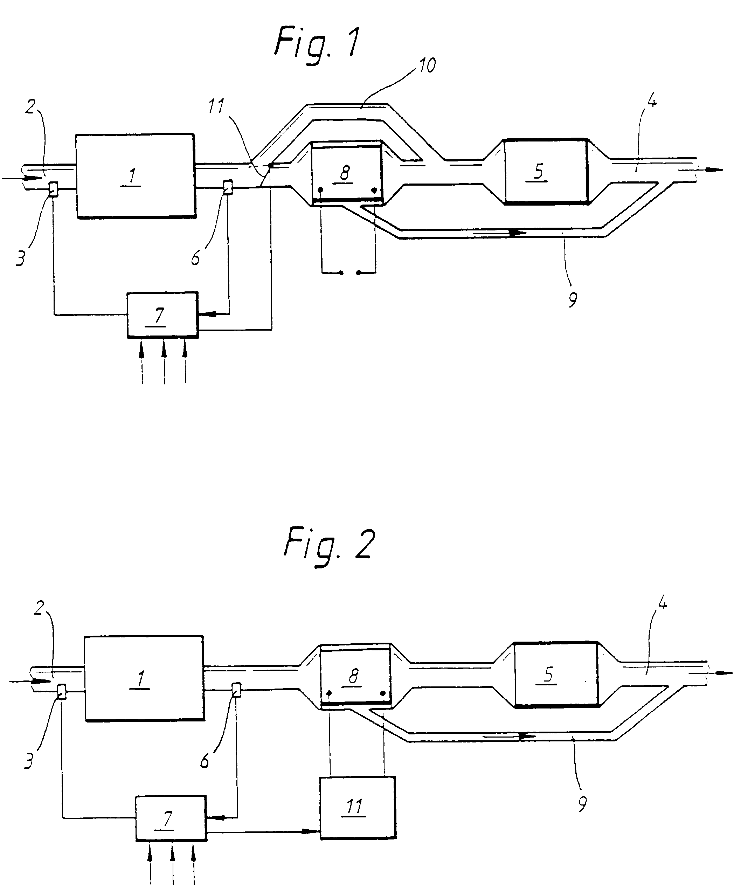

Der insgesamt mit 1 bezeichnete Ottomotor aus Fig. 1 wird über eine Ansaugleitung 2, in der eine Einspritzvorrichtung 3 vorgesehen ist, mit einem Luft-/Kraftstoffgemisch beaufschlagt. Nach der Verbrennung des Luft-/Kraftstoffgemisches im nicht dargestellten Brennraum des Ottomotors 1 wird das dabei entstehende Abgas über eine Abgasleitung 4, in der ein Drei-Wege-Katalysator 5 angeordnet ist, an die Umgebung abgegeben. Zur Regelung des Luft-/Kraftstoffverhältnisses λ ist stromauf des Drei-Wege-Katalysators 5 ein Lambdasensor 6 in der Abgasleitung 4 angeordnet, welcher ein das Luft-/Kraftstoffverhältnis λ. charakterisierendes Signal für ein Regelgerät 7 bereitstellt. In Abhängigkeit von diesem Signal und von weiteren Betriebsparametern steuert das Regelgerät 7 die von der Einspritzvorrichtung 3 eingespritzte Kraftstoffmenge.

Zusätzlich ist in der Abgasleitung 4 zwischen dem Lambdasensor 6 und dem Drei-Wege-Katalysator 5 eine Sauerstoff-Absorptionsvorrichtung 8 vorgesehen. Die Sauerstoff-Absorptionsvorrichtung 8 ist über eine Abströmleitung 9 mit der Abgasleitung 4 stromab des Drei-Wege-Katalysators 5 verbunden. Außerdem ist ein Bypasskanal 10, welcher zwischen Lambdasensor 6 und Sauerstoff-Absorptionsvorrichtung 8 von der Abgasleitung 4 abzweigt und zwischen Sauerstoff-Absorptionsvorrichtung 8 und Drei-Wege-Katalysator 5 wieder in die Abgasleitung 4 einmündet, vorgesehen. Zur Abgasführung ist eine als Bypassklappe ausgebildete Steuervorrichtung 11 im Bereich der Abzweigung des Bypasskanals 10 in der Abgasleitung 4 angeordnet. Mit Hilfe dieser Steuervorrichtung 11 kann das Abgas entweder durch die Sauerstoff-Absorptionsvorrichtung 8 oder durch den Bypasskanal 10 geleitet werden. Die Steuervorrichtung 11 kann vom Regelgerät 7 oder von einem separaten Steuergerät angesteuert werden.

In diesem Ausführungsbeispiel ist die Sauerstoff-Absorptions-vorrichtung 8 als Nernst'sche Zelle ausgebildet. Die Nernst'sche Zelle basiert auf dem Prinzip der Elektrodialyse, wobei der Sauerstoff durch Anlegen einer Spannung aus dem Abgas absorbiert wird. Zur Spannungsversorgung ist die Sauerstoff-Absorptionsvorrichtung 8 mit der nicht näher gezeigten Fahrzeugbatterie oder einer anderen Spannungsquelle verbunden.

Im Betrieb des Ottomotors 1 wird im Regelgerät 7 in Abhängigkeit von Betriebsparametern ein Sollwert für das Luft-/Kraftstoffverhältnis λ vorgegeben, mit dem Signal des Lambdasensors 6 verglichen und die Menge des mit Hilfe der Einspritzvorrichtung 3 zugeführten Kraftstoffs entsprechend eingestellt. Hierbei wird der Betriebsbereich des Ottomotors zumindest in zwei Betriebsbereiche aufgeteilt. Im ersten Betriebsbereich, der vorzugsweise den Teillastbereich umfaßt, wird der Ottomotor durch Vorgabe eines entsprechenden Sollwertes mit einem mageren Luft-/Kraftstoffverhältnis, beispielsweise bei λ=1,4 betrieben. Gleichzeitig wird vom Regelgerät 7 die Bypassklappe 11 geschlossen, so daß das gesamte Abgas durch die Sauerstoff-Absorptionsvorrichtung 8 strömt. Durch die an der Sauerstoff-Absorptionsvorrichtung 8 angelegte Spannung wird Sauerstoff aus dem Abgas absorbiert, über eine Abströmleitung 9 abgeführt und stromab des Drei-Wege-Katalysators 5 wieder der Abgasleitung 4 zugeführt. Die Sauerstoff-Absorptionsvorrichtung 8 wird dabei so ausgelegt, daß der Drei-Wege-Katalysator 5 trotz des Magerbetriebs mit Abgas beaufschlagt wird, dessen Zusammensetzung der bei einem Betrieb mit λ=1 entspricht. Dadurch kann die vollständige Funktionsfähigkeit des Drei-Wege-Katalysators auch in diesem ersten Betriebsbereich gewährleistet werden.

Prinzipiell kann dieser erste Betriebsbereich auch den Kaltstart einschließen. Der Drei-Wege-Katalysator und auch die Nernst'sche Zelle erlangen ihre volle Funktionsfähigkeit jedoch erst nach dem Erreichen ihrer Betriebstemperatur. Um eine schnelle Erwärmung des Drei-Wege-Katalysators und auch der Nernst'schen Zelle zu gewährleisten, kann der Ottomotor beim Kaltstart auch mit einem Luft-/Kraftstoffverhältnisses im Bereich λ=1 betrieben werden.

Verläßt der Ottomotor den ersten Betriebsbereich in Richtung Vollast, so wird vom Regelgerät 7 ein neuer Sollwert für das Luft-/Kraftstoffverhältnis im Bereich von λ=1 vorgegeben und gleichzeitig die Bypassklappe 11 geöffnet, so daß das gesamte Abgas durch den Bypasskanal 10 an der Sauerstoff-Absorptionsvorrichtung 8 vorbei zum Drei-Wege-Katalysator 5 strömt. Da sich die Stickoxid- und Kohlenwasserstoffkonzentrationen im Abgas bei λ=1 und λ=1,4 in etwa entsprechen, wird der Drei-Wege-Katalysator 5 somit ständig mit optimalen Wirkungsbereich betrieben. Um Lastsprünge beim Übergang vom ersten zum zweiten Betriebsbereich zu vermindern, wird der Zündzeitpunkt kurzfristig in Richtung spät verstellt. Die Umleitung des Abgases weist zusätzlich den Vorteil auf, daß die thermische Belastung der Sauerstoff-Absorptionsvorrichtung 8 unter Vollast bei gleichzeitiger Verringerung des Abgasgegendrucks reduziert wird. Im Teillastbereich schadet die geringe Gegendruckerhöhung durch die Sauerstoff-Absorptionsvorrichtung 8 bezüglich des Verbrauchsvorteils nur unwesentlich, während die Gesamtemissionen sogar noch reduziert werden.

In Fig. 2 ist ein weiteres Ausführungsbeispiel dargestellt, wobei gleiche Teile mit gleichen Bezugszeichen gekennzeichnet sind. Im Gegensatz zu Fig. 1 kann bei dieser Anordnung der Bypasskanal 10 entfallen. Die Aktivierung beziehungsweise Deaktivierung der Sauerstoff-Absorptionsvorrichtung 8 erfolgt hierbei durch eine Steuervorrichtung 11, welche die Sauerstoff-Absorptionsvorrichtung 8 mit der Spannungsversorgung verbindet beziehungsweise davon trennt.

Mit dieser Anordnung ist es auch möglich, anstelle des Drei-Wege-Katalysators 5 einen Denox-Katalysator zu verwenden, wobei der Ottomotor 1 dann ständig mit einem mageren Luft-/Kraftstoffverhältnis betrieben wird. Eine Ausnahme bildet lediglich der Vollastbereich, in dem der Motor zur Bereitstellung einer erhöhten Leistung mit einem Luft-/Kraftstoffverhältnis im Bereich von λ=1 betrieben werden kann. Bei magerer Motorbetriebsweise besteht durch Luftüberschuß im Abgas Vergiftungsgefahr für die aktive Fläche des Denox-Katalysators, was eine Abnahme der Nox-Konversionsrate zur Folge hat. Daher wird immer dann, wenn die Nox-Konversionsrate des Denox-Katalysators 5 durch die Sauerstoff-Vergiftung des Katalysatormaterials auf einen unzureichenden Wert absinkt, die Sauerstoff-Absorptionsvorrichtung 8 kurzzeitig aktiviert. Dadurch wird dem Abgas der Sauerstoff entzogen und somit die Katalysatormaterial durch Reduktion wieder aktiviert. Erreicht der Katalysator 5 wieder eine ausreichende Konversionsrate, so kann die Sauerstoff-Absorptionsvorrichtung 8 wieder deaktiviert werden.

## Patentansprüche

1. Ottomotor mit einem in einer Abgasleitung angeordneten Drei-Wege-Katalysator und einer stromauf des Katalysators in der Abgasleitung angeordneten Sauerstoff-Absorptionsvorrichtung und einem Regelgerät zur Einstellung des Luft-/ Kraftstoffverhältnisses,
**dadurch gekennzeichnet**,
daß die Sauerstoff-Absorptionsvorrichtung (8) nach dem Prinzip der Elektrodialyse arbeitet und eine Abströmleitung (9) zur Ableitung des absorbierten Sauerstoffs aufweist, daß parallel zur Sauerstoff-Absorptionsvorrichtung (8) ein mittels einer Bypassklappe (11) verschließbarer Bypasskanal (10) angeordnet ist, daß in einem ersten Betriebsbereich das Regelgerät (7) ein mageres Luft-/Kraftstoffverhältnis (λ) einstellt, die Sauerstoff-Absorptionsvorrichtung (8) durch Anlegen einer elektrischen Spannung aktiviert und den Bypasskanal (10) durch Schließen der Bypassklappe (11) sperrt, und daß das Regelgerät (7) ansonsten ein Luft-/Kraftstoffverhältnis in Bereich von λ=1 einstellt, die Sauerstoff-Absorptionsvorrichtung (8) deaktiviert und das Abgas durch Öffnen der Bypassklappe (11) durch den Bypasskanal (10) umleitet.

2. Ottomotor mit einem in einer Abgasleitung angeordneten Katalysator und einer stromauf des Katalysators in der Abgasleitung angeordneten Sauerstoff-Absorptionsvorrichtung und einem Regelgerät zur Einstellung des Luft-/ Kraftstoffverhältnisses,
**dadurch gekennzeichnet**,
daß der Ottomotor (1) im wesentlichen mit einem mageren Luft/Kraftstoffverhältnis (λ) betrieben wird, daß der Katalysator (5) als Denox-Katalysator ausgebildet ist, daß die Sauerstoff-Absorptionsvorrichtung (8) nach dem Prinzip der Elektrodialyse arbeitet wobei eine Abströmleitung (9) zur Ableitung des absorbierten Sauerstoffs unter Umgehung des Katalysators (5) vorgesehen ist, und daß die Sauerstoff-Absorptionsvorrichtung (8) durch Anlegen einer elektrischen Spannung aktiviert wird, falls die Konversionsrate des Katalysators (5) ungenügend ist und daß die Sauerstoff-Absorptionsvorrichtung (8) wieder deaktiviert wird, sobald eine ausreichende Konversionsrate wieder erreicht ist.

3. Ottomotor nach Anspruch 1 oder 2,
**dadurch gekennzeichnet**,
daß die Abströmleitung (9) die Sauerstoff-Absorptionsvorrichtung (8) mit der Abgasleitung (4) stromab des Katalysators (5) verbindet.

4. Ottomotor nach Anspruch 1 oder 2,
**dadurch gekennzeichnet**,
daß als Sauerstoff-Absorptionsvorrichtung (8) eine Nernst'sche Zelle verwendet wird.

## Claims

1. A spark ignition engine with a three-way catalytic convertor positioned in an exhaust pipe and an oxygen absorption device located upstream of the catalytic convertor in the exhaust pipe and a control device to set the air/fuel ratio,
**characterised in that**
the oxygen absorption device (8) works on the principle of electro-dialysis and has a discharge line (9) to carry offthe absorbed oxygen, that a bypass channel (10) which can be closed by means of a bypass shutter (11) is positioned parallel to the oxygen absorption device (8), that in a first operating range the control device (7) sets a thin air/fuel ratio (λ), activates the oxygen absorption device (8) by applying an electrical voltage and blocks the bypass channel (10) by closing the bypass shutter (11), and that the control device (7) otherwise sets an air/fuel ratio in the region of 1=λ, deactivates the oxygen absorption device (8) and diverts the exhaust gas through the bypass channel (10) by opening the bypass shutter (11).

2. A spark ignition engine with a catalytic convertor positioned in an exhaust pipe and an oxygen absorption device located upstream of the catalytic convertor in the exhaust pipe and a control device to set the air/fuel ratio,
**characterised in that**,
in essence the spark ignition engine (1) is operated with a thin air/fuel ratio (λ), that the catalytic convertor (5) is designed as an NOₓ-type catalytic convertor, that the oxygen absorption device (8) works on the principle of electro-dialysis whereby a discharge line (9) is provided to carry off the absorbed oxygen, thus avoiding the catalytic convertor (5), that the oxygen absorption device (8) is activated by applying an electrical voltage if the conversion rate of the catalytic convertor (5) is insufficient, and that the oxygen absorption device (8) is deactivated again as soon as a sufficient conversion rate is achieved once more.

3. A spark ignition engine in accordance with Claim 1 or 2,
**characterised in that,**
the discharge line (9) connects the oxygen absorption device (8) to the exhaust pipe (4) downstream of the catalytic convertor (5).

4. A spark ignition engine in accordance with Claim 1 or 2,
**characterised in that,**
a Nernst cell is used as the oxygen absorption device (8).

## Revendications

1. Moteur à combustion interne à bougie d'allumage comportant un catalyseur à trois voies disposé dans un tuyau d'échappement et un dispositif d'absorption de l'oxygène disposé dans le tuyau d'échappement en amont du catalyseur et un appareil de régulation pour régler le rapport du mélange air/carburant,
caractérisé
par le fait que le dispositif (8) d'absorption de l'oxygène travaille selon le principe de l'électrodialyse et présente une conduite d'évacuation (9) pour évacuer l'oxygène absorbé, que, parallèlement au dispositif (8) d'absorption de l'oxygène, est disposé un canal de bypass (10) qu'un clapet de bypass (11) peut obturer, que, sur une première plage d'exploitation, l'appareil de régulation (7) prescrit un rapport de mélange air/carburant (λ) maigre, active le dispositif (8) d'absorption de l'oxygène en le plaçant sous tension électrique et verrouille le canal de bypass (10) en fermant le clapet de bypass (11), et qu'en dehors de cette plage l'appareil de régulation (7) prescrit un rapport de mélange air/carburant au voisinage de λ=1, désactive le dispositif (8) d'absorption de l'oxygène et fait passer les gaz d'échappement par le canal de bypass (10) en ouvrant le clapet de bypass (11).

2. Moteur à combustion interne à bougie d'allumage comportant un catalyseur disposé dans un tuyau d'échappement et un dispositif d'absorption de l'oxygène disposé dans le tuyau d'échappement, en amont du catalyseur, et un appareil de régulation pour prescrire le rapport de mélange air/carburant,
caractérisé
par le fait que le moteur à combustion interne à bougie d'allumage ( 1) est essentiellement exploité avec un rapport de mélange air/carburant (λ) maigre, que le catalyseur (5) est conçu en tant que catalyseur Denox, que le dispositif (8) d'absorption de l'oxygène travaille selon le principe de l'électrodialyse, une conduite d'évacuation (9) étant prévue pour évacuer l'oxygène absorbé en contournant le catalyseur (5), et que le dispositif (8) d'absorption de l'oxygène est activé par apport d'une tension électrique, dans le cas où le taux de conversion du catalyseur (5) est insuffisant, et que le dispositif (8) d'absorption de l'oxygène est à nouveau désactivé dès qu'un taux de conversion suffisant est à nouveau obtenu.

3. Moteur à combustion interne à bougie d'allumage selon la revendication 1 ou 2,
caractérisé
par le fait que la conduite d'évacuation (9) relie le dispositif (8) d'absorption de l'oxygène avec le tuyau d'échappement (4) en aval du catalyseur (5).

4. Moteur à combustion interne à bougie d'allumage selon la revendication 1 ou 2,
caractérisé
par le fait que comme dispositif (8) d'absorption de l'oxygène on emploie une cellule de Nernst.
